# EUROPÄISCHE PATENTSCHRIFT

(11) **EP 1 304 005 B1**
(45) Veröffentlichungstag und Bekanntmachung des Hinweises auf die Patenterteilung: **15.09.2004**
(21) Anmeldenummer: 00943517.3
(22) Anmeldetag: 26.07.2000
(51) Int. Cl.: H04Q 7/30, H04B 3/54

(54) **VERFAHREN ZUM ERRICHTEN EINER BASISSTATION EINES MOBILFUNKNETZES UND VERBINDEN DER BASISSTATION MIT DEM MOBILFUNKNETZ**
METHOD FOR THE ASSEMBLY OF A MOBILE RADIO NETWORK BASE STATION AND CONNECTION OF THE BASE STATION TO THE NETWORK
PROCEDE PERMETTANT D'ETABLIR UNE STATION DE BASE DANS UN RESEAU DE TELEPHONIE MOBILE ET DE RELIER CETTE STATION DE BASE AU RESEAU DE TELEPHONIE MOBILE

(43) Veröffentlichungstag der Anmeldung: 23.04.2003
(73) Patentinhaber: Swisscom Mobile AG, 3050 Bern (CH)
(72) Erfinder: RITTER, Rudolf, CH-3052 Zollikofen (CH)
(74) Vertreter: BOVARD AG - Patentanwälte
(86) Internationale Anmeldenummer: PCT/CH2000/000408
(87) Internationale Veröffentlichungsnummer: WO 2002/009462

(56) Entgegenhaltungen:
- EP-A- 0 690 641
- EP-A- 0 840 464
- WO-A-95/29537
- WO-A-99/00906
- GB-A- 2 126 845
- US-A- 5 832 364

## Beschreibung

Die vorliegende Erfindung betrifft ein Verfahren zum Errichten einer Basisstation eines Mobilfunknetzes und Verbinden der Basisstation mit dem Mobilfunknetz. Das Mobilfunknetz umfasst ein Mobile-services Switching Centre (MSC) und ein oder mehrere Base Station Controller (BSC) mit jeweils einer oder mehreren Basisstationen (BTS), weiches Mobilfunknetz über das MSC mit dem öffentlichen, geschalteten Telefonnetz verbunden ist. Die Base Station Controller sind mit dem Mobile-services Switching Centre verbunden, während jeweils eine oder mehrere der Basisstationen mit einem gemeinsam zugeordneten Base Station Controller verbunden sind. Die Basisstationen umfassen Mittel zum Empfangen und Senden von Radiofrequenzsignalen mit Mobilfunkgeräten. Insbesondere umfasst die vorliegende Erfindung ein Verfahren zum Errichten einer Basisstation eines öffentlichen Mobilfunknetzes (PLMN) und dem Verbinden der Basisstation mit dem öffentlichen Mobiffunknetz sowie die Vorrichtung eines entsprechenden Mobilfunknetzes.

Öffentliche Mobilfunknetze (PLMN: Public Land Mobile Network) erlauben es den Benutzern auf verschiedenste mobile Telekommunikationsdienste zuzugreifen. Ein solches Mobilfunknetz kann als Erweiterung des öffentlichen Festnetzes (PSTN: Public Switched Telephone Network) betrachtet werden. Es setzt sich typischerweise (wie es z.B. beschrieben ist in Digital cellular telecommunications system; Network architecture: GSM (Global System for Mobile communicationes); Technical Specification; European Telecommunications Standards Institute (ETSI), TS/SMG-030302Q) aus verschiedenen Sende- und Empfangsgebieten, welche einem sog. Mobile-services Switching Centre (MSC) zugeordnet sind, zusammen, wobei die Gebiete einen Destinationscode und einen gemeinsamen Routingplan haben. Ein MSC bildet das funktionale Interface zwischen dem Festnetz und dem Mobilfunknetz. Die MSCs stellen alle notwendigen Funktionen für Anrufe von oder zu einem Mobilfunkgerät zur Verfügung. Um Flächendeckung des Empfangs- und Sendebereichs in einem bestimmten geographischen Gebiet zu erhalten, sind im Normalfall mehrere Basisstationssysteme (BSS: Base Station System) notwendig; d.h. jedes MSC ist folglich ein Interface zu mehreren Basisstationssystemen. Umgekehrt sind im Normalfall mehrere MSCs nötig, um ein ganzes Land abzudecken. Ein BSS besteht aus einem Basis Station Controller (BSC) und einem oder mehreren Basisstationen (BTS: Base Transceiver Station). Eine Basisstation deckt eine sog. Empfangs-/Sendezelle ab. Das Basisstationssystem umfasst alle technisch notwendigen Mittel (Transceivers, Kontrollers etc.), so dass die MSC mit einem bestimmten Mobilfunkgerät in einer bestimmten Zelle kommunizieren kann. Ein BSC ist eine Netzwerkkomponente des Mobilfunknetzes, um eine oder mehrere Basisstationen anzusprechen.

Die mobile Telekommunikation über solche oben beschriebene öffentliche Mobilfunknetze hat in den letzten Jahren durch eine breite Palette neuer und verbesserter Angebote sowohl im technologischen Bereich als auch bei den Dienstleistungen ein grosses Wachstum in allen Sektoren verzeichnen können. Einer der Faktoren, die zu diesem Wachstum beigetragen haben, ist, dass ein Benutzer eines solchen Mobilfunknetzes immer und überall erreichbar sein würde. Trotz grossen Anstrengungen wurde dieses Ziel von der Industrie aber unter anderem wegen den hohen Kosten bei der Installation eines flächendeckenden Antennennetzes mit Basisstationen nicht überall erreicht. In Ballungszentren ist jedoch im Gegenteil zu beobachtet, dass es durch sich konkurrenzierende Telekommunikationsgesellschaften zu einer Mehrfachabdeckung des gleichen Gebietes kommen kann. Dadurch entsteht eine unnötig grosse Belastung der Bevölkerung dieser Gebiete im Radiofrequenzbereich (Elektrosmog). Belastungspitzen solcher Gebiete können insbesondere dadurch reduziert werden, dass strukturbedingte Abschirmungen durch lokalere Emfangs- und Sendestationen verringert oder umgangen werden. Die Suche nach neuen, kostenverträglichen Lösungen mit möglichst kleinen und trotzdem genügend grossen Empfangs- und Sendeleistungen in diesem Bereich erscheint heute wichtiger als je.

Die UK Patentanmeldung GB 2126845 A offenbart ein Verfahren und ein System zur Erweiterung von Mobilfunknetzen in geschlossenen Räumen wie z.B. Bergbauminen. Bei dem System wird das Trägersignal an existierende Stromversorgungskabel gekoppelt bzw. moduliert, welche die Mine mit Strom versorgen. Innerhalb der Mine wird das Signal von einer Sendestation demoduliert und mittels Repeater in der Mine ausgestrahlt. Die internationale Patentanmeldung WO 99/00906 zeigt ein Verfahren und ein System zum Übermitteln von Radiofrequenzsignalen über ein Stromnetz. Dazu wird die Frequenz der Signale bei einer ersten Station auf eine zweite Frequenz konvertiert und auf das Stromnetz moduliert. Eine zweite Station demoduliert die Signale vom Stromnetz und strahlt sie in ihrer ursprünglichen Frequenz ab. Die US-Patentschrift US 5832364 schliesslich offenbart ebenfalls eine System zum Übertragen von Radiofrequenzsignalen über ein Stromnetz. Ein Transceiver moduliert wie in der vorgenannten Patentschrift die Radiofrequenzsignale auf das Stromnetz. Ein zweiter Transceiver demoduliert die Signale und strahlt sie mit der ursprünglichen. Frequenz ab.

Es ist eine Aufgabe dieser Erfindung, ein Mobilfunknetz und ein neues entsprechendes Verfahren zum Errichten einer Basisstation eines solchen Mobilfunknetzes und Verbinden der Basisstation mit einem solchen Mobilfunknetz vorzuschlagen, welche die obenerwähnten Nachteile nicht aufweisen. Insbesondere soll es eine Lösung sein, welche es erlaubt, Sende- und Empfangsgebiete kostengünstig und schnell auszubauen.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass in einem Mobilfunknetz, welches mindestens ein Mobile-services Switching Centre mit einem dem Mobile-services Switching Centre zugeordneten Sende-/Empfangsgebiet und einer oder mehrere Base Station Controller mit jeweils ein oder mehreren Basisstationen umfasst, wobei das Mobilfunknetz über das Mobile-services Switching Centre mit dem öffentlichen, geschalteten Telefonnetz verbunden ist, wobei die Base Station Controller mit dem Mobile-service Switching Centre verbunden sind und Kontroll- und Steuerfunktionen für die Basisstationen umfassen, wobei jeweils eine oder mehrere der Basisstationen mit einem gemeinsam zugeordneten Base Station Controller verbunden sind und wobei die Basisstationen jeweils Mittel zum Austausch von Radiofrequenzsignalen mit Mobilfunkgeräten umfassen, mindestens eine der Basisstationen in eine bestehende Einrichtung auf öffentlichem, nicht überdecktem Grund eingebaut wird, welche Einrichtung über ein Stromnetz gespiesen wird, dass die mindestens eine der Basisstationen mit einem ersten Transceivermodul an das Stromnetz gekoppelt wird, dass ein zweites Transceivermodul an anderer Stelle ebenfalls an das Stromnetz gekoppelt wird, wodurch das Übertragen von den Radiofrequenzsignalen entsprechenden, elektrischen Signalen bidirektional zwischen den Transceivermodulen mittels den Transceivermodulen über das Stromnetz ermöglicht wird und dass das zweite Transceivermodul mit dem der mindestens einen genannten Basisstationen zugeordneten Base Station Controller verbunden wird, so dass Kommunikation zwischen der mindestens einen Basisstation und dem ihr zugeordneten Base Station Controller über das Stromnetz miteinander ermöglicht wird. Die Erfindung hat u.a. den Vorteil, dass ein Minimum an neuen Installationen notwendig ist, um das Netz auszubauen, indem auf bestehende Infrastruktur zurückgegriffen wird. Dies betrifft nicht nur den Kostenaufwand, sondern auch den für den Bau benötigten Zeitaufwand für eine vergleichbare Standardinstallation von Basisstationen. Ein anderer Vorteil ist, dass die Sendeleistung der Basisstationen durch die verhältnismässig kleinen Zellgrössen bei den meist sehr lokalen Installationen klein gehalten werden kann. Dies kann bei der stets stärkeren staatlichen Reglementierungen entsprechend wichtig werden.

In einer Ausführungsvariante benutzen die Transceivermodule zur Übertragung ein Sendesignal; ein Empfangssignal sowie ein separates Kontrollsignal. Diese Ausführungsvariante hat insbesondere den Vorteil, dass sie den GSM Anforderungen entspricht.

In einer weiteren Ausführungsvariante werden als öffentliche Einrichtungen zur Installation der Basisstationen Strassenbeleuchtungsvorrichtungen des Strassennetzes, wie z.B. Strassenlaternen oder andere Beleuchtungskörper von öffentlichen und privaten Anlagen etc. verwendet. Diese Ausführungsvariante hat u.a. den Vorteil, dass sie leicht zugängliche und weit verbreitete öffentliche Einrichtungen benutzt.

In einer weiteren Ausführungsvariante werden als öffentliche Einrichtungen zum Einbau der Basisstationen das Stromversorgungsnetz mit den dazu notwendigen Installationsvorrichtungen öffentlicher Verkehrsmittel verwendet. Diese Ausführungsvariante hat dieselben Vorteile wie die vorhergehende Ausführungsvariante.

In einer Ausführungsvariante besitzen der Base Station Controller und die mit ihm verbundenen Basisstationen jeweils einen Kontrollprozessor mit einem Modem, welcher Kontrollprozessor beispielsweise an ein Frequenztriplexer/Triplexfilter gekoppelt ist, mittels welchem Kontrollprozessor und Modem die Radiofrequenzsignale durch zwei Übertragungssignale und ein Kontrollsignal in einem separaten Frequenzbereich übertragbar sind. Diese Ausführungsvariante hat insbesondere die Vorteile, dass sie den GSM Anforderungen entspricht.

In einer weiteren Ausführungsvariante benutzen die Transceivermodule Frequency Shift Keying (FSK) als Frequenzmodulationstechnik für die Übertragung. Diese Ausführungsvariante hat insbesondere den Vorteil, dass die Übertragungssicherheit erhöht wird.

In einer weiteren Ausführungsvariante benutzen die Transceivermodule FDMA (Frequency Division Multiple Access) und/oder), TDMA (Time Division Multiple Access) oder CDMA (Code Division Multiple Access) als Frequenzmodulationstechnik für die Übertragung. Diese Ausführungsvariante hat insbesondere den Vorteil, dass die Kombination aus TDMA und FDMA dem GSM-Standard und Breitband-CDMA mit einer Übertragungsrate von bis zu 2Mbit/Sekunde dem UMTS-Standard entspricht.

In einer anderen Ausführungsvariante benutzen die Transceivermodule ein Übertragungsfrequenzband zwischen 100MHz und 500MHz zur Übertragung der Radiofrequenzsignale über das Stromnetz. Dies hat u.a. die Vorteile, dass sich dieses Frequenzband für die Übertragung übers Stromnetz speziell eignet.

In einer weiteren Ausführungsvariante werden mit mindestens einer der Basisstationen zwei oder mehr unterschiedliche Empfangs-/Sendezellen mit unterschiedlicher Cell Group Identity abdeckt.

An dieser Stelle soll festgehalten werden, dass sich die vorliegende Erfindung neben dem erfindungsgemässen Verfahren auch auf ein System zur Ausführung dieses Verfahrens bezieht.

Nachfolgend werden Ausführungsvarianten der vorliegenden Erfindung anhand von Beispielen beschrieben. Die Beispiele der Ausführungen werden durch folgende beigelegte Figuren illustriert:
Figur 1 zeigt ein Blockdiagramm, welches schematisch ein Ausführungsbeispiel eines Mobilfunknetzes gemäss der vorliegenden Erfindung illustriert, bei welcher Strassenbeleuchtungsvorrichtungen des öffentlichen Strassennetzes verwendet werden.
Figur 2 zeigt ein Blockdiagramm, welches schematisch ein Ausführungsbeispiel einer in eine Strassenbeleuchtungsvorrichtung eingebauten Basisstation sowie das Transceivermodul für die Verbindung zum Basis Station Controller illustriert.
Figur 3 zeigt ein Blockdiagramm, welches schematisch ein anderes Ausführungsbeispiel einer in eine Strassenbeleuchtungsvorrichtung eingebauten Basisstation sowie das Transceivermodul für die Verbindung zum Basis Station Controller illustriert.
Figur 4 zeigt ein Blockdiagramm, welches detaillierter ein Ausführungsbeispiel einer in eine Strassenbeleuchtungsvorrichtung eingebauten Basisstation und das ihr zugeordnete Transceivermodul illustriert.
Figur 5 zeigt ein Blockdiagramm, welches detaillierter ein Ausführungsbeispiel eines einem Base Station Controller zugeordnetes Transceivermodul illustriert.
Figur 6 zeigt ein Blockdiagramm, welches schematisch ein Ausführungsbeispiel eines Mobilfunknetz analog zu Figur 1 illustriert, wobei ein einem Base Station Controller (BSC) zugeordnetes Transceivermodul mit mehreren Transceivermodulen von verschiedenen Basisstationen gleichzeitig kommuniziert.
Figur 7 zeigt ein Blockdiagramm, welches schematisch ein Ausführungsbeispiel einer in eine Strassenbeleuchtungsvorrichtung eingebauten Basisstation illustriert, wobei die Basisstation zwei unterschiedliche Empfangs/Sendezellen mit unterschiedlicher Cell Group identity abdeckt.
Figur 8 zeigt ein Blockdiagramm, welches schematisch ein Ausführungsbeispiel eines Koppeletementes eines Transceivermoduls zur bidirektionalen Übertragung von den Radiofrequenzsignalen entsprechenden elektrischen Signalen auf das Stromnetz illustriert.
Figur 9 zeigt ein Blockdiagramm, welches schematisch ein Ausführungsbeispiel eines Mobilfunknetzes analog zum Ausführungsbeispiel von Figur 1 illustriert, wobei die bidirektionale Übertragung der Radiofrequenzsignale vom einen Transceivermodul zum anderen Transceivermodul und umgekehrt über ein drei-phasiges Stromnetz geschieht.

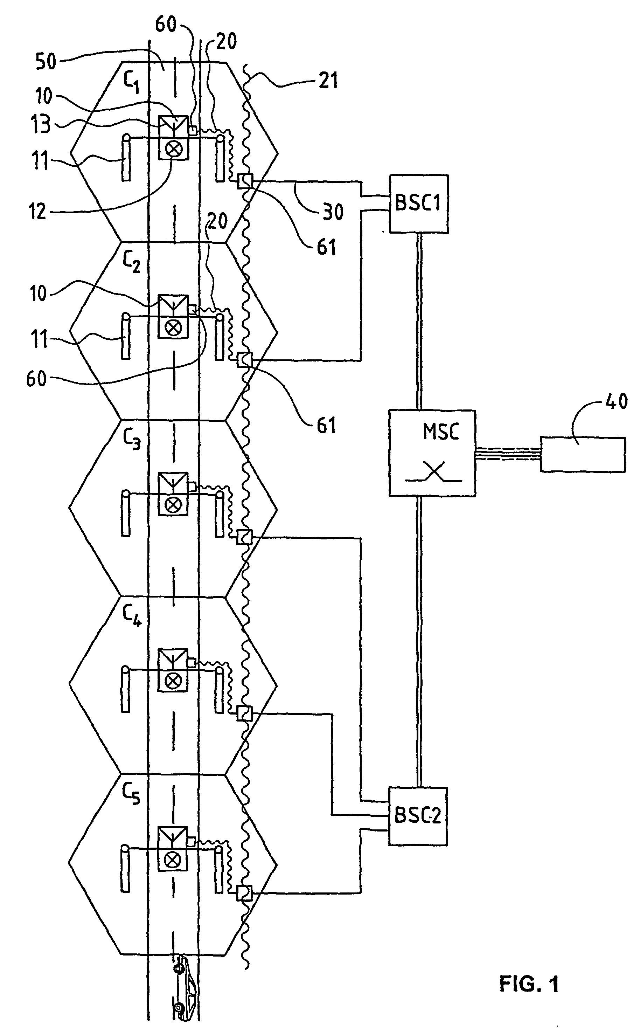

Figur 1 illustriert eine Architektur, die zur Realisierung der Erfindung verwendet werden kann. In diesem Ausführungsbeispiel umfasst ein Mobilfunknetz mindestens ein Mobile-services Switching Centre MSC mit einem dem Mobile-services Switching Centre MSC zugeordneten Sende-/Empfangsgebiet und ein oder mehrere Base Station Controller BSC1/BSC2 mit jeweils ein oder mehreren Basisstationen (BTS: Base Transceiver Station) 10. Der Aufbau des Mobilfunknetzes und seine Komponenten können z.B. gemäss dem GSM-Standard (Global System for Mobile Communications) des ETSI (European Telecommunications Standards Institute) oder dem UMTS-Standard (Universal Mobile Telephone System) erfolgen. Das Mobilfunknetz kann z.B. ein öffentliches Mobilfunknetz (PLMN: Public Land Mobile Network) sein. Das Mobilfunknetz ist beispielsweise über das Mobile-services Switching Centre MSC mit dem öffentlichen, geschalteten Telefonnetz (PSTN: Public Switched Telephone Network) 40 verbunden. Das Mobile-services Switching Centre MSC umfasst Schalt- und Signalfunktionen zum Verwalten von Mobilfunkgeräten. Die Base Station Controller BSC1/BSC2 sind mit dem Mobile-services Switching Centre MSC verbunden und umfassen Kontroll- und Steuerfunktionen für die Basisstationen 10. Jeweils eine oder mehrere der Basisstationen 10 sind mit einem gemeinsam zugeordneten Base Station Controller BSC verbunden und umfassen jeweils Mittel zum Austausch von Radiofrequenzsignalen mit Mobilfunkgeräten, welche Mobilfunkgeräte innerhalb des von einer Basisstation 10 abgedeckten Sende-/Empfangsgebietes, einer sog. Sende-/Empfangszelte, C₁...C₅ liegen. Die Basisstationen 10 werden in bestehende Einrichtungen 11 auf öffentlichem, nicht überdecktem Grund eingebaut, welche Einrichtungen 11 über ein Stromnetz 20/21 gespiesen werden oder über einen Stromnetzanschluss verfügen. Unter "bestehende" Einrichtungen sind Einrichtungen zu verstehen, die auch für andere Zwecke benutzt werden oder werden können, als für den Einbau von Basisstationen 10. Mit "öffentlichem Grund" sind hier im speziellen Orte gemeint, von welchen die Basisstationen 10 nicht überdecktes Gebiet C₁...C₅ mit Radiofrequenzsignalen abdecken. Die Orte können durchaus also auf privatem Gelände liegen. Beispielsweise sind solche bereits bestehende Infrastrukturen auf öffentlichem, nicht überdecktem Gebiet Strassenbeleuchtungsvorrichtungen wie Strassenlaternen, Strassenlampen etc., Flutlichtstrahler für Sportplätze, Stadions u.ä., Einrichtungen zur Stromversorgung öffentlicher Verkehrsmittel, wie z.B. Strassenbahnen oder Eisenbahnen, aber auch solche Einrichtungen im weiteren Sinn wie Skilifteinrichtungen, Seilbahneinrichtungen etc. sein. In diesem Ausführungsbeispiel wurde als Einrichtungen 11 Strassenbeleuchtungsvorrichtungen 12 des öffentlichen Strassennetzes 50 dargestellt. Die Ziffer 13 bezeichnet die Antenne 13 einer Basisstation 10. Die Basisstationen 10 werden jeweils mit einem ersten Transceivermodul 60 an das Stromnetz 20 gekoppelt. Ein jeweils zweites Transceivermodul 61 wird an anderer Stelle ebenfalls an das Stromnetz 20 gekoppelt. Damit wird das Übertragen von den Radiofrequenzsignalen entsprechenden, elektrischen Signalen bidirektional zwischen den Transceivermodulen 60/61 über das Stromnetz 20 mittels den Transceivermodulen 60/61 ermöglicht. Die Transceivermodule 61 werden mit dem der jeweiligen Basisstation 10 zugeordneten Base Station Controller BSC1/BSC2 verbunden, so dass Kommunikation zwischen den Basisstationen 10 und den ihnen zugeordneten Base Station Controller BSC1/BSC2 über das Stromnetz 20 und die Verbindung 30 stattfinden kann. Power Line Communication PLC, d.h. die Übermittlung von den Radiofrequenzsignalen entsprechenden elektrischen Signalen über das Stromnetz ist im Stand der Technik in verschiedenen Ausführungsvarianten bekannt. Beispiele solcher Anordnungen können in der Patentschrift WO98/0618 "Power Line Communications" oder in der Patentschrift US5977650 "Transmitting Communications Signals Over A Power Line Network" gefunden werden. Die Verbindung 30 zwischen den Transceivermodulen 61 und dem Base Station Controller BSC1/BSC2 kann z.B. über ein Koaxialkabel, ein optisches Kabel/Glasfaserkabel oder über ein Twisted Pair Kabel erfolgen. Benachbarte Sende-/Empfangszellen von Basisstationen konventioneller Mobilfunknetze weisen typischerweise eine Grösse zwischen 2 und 20 km auf. Dabei werden meist kurzreichweitige (low power) Basisstationen verwendet. In der vorliegenden Erfindung kann die Zellgrösse der einzelnen Zellen C₁...C₅ aber viel kleiner sein, zum Beispiel nur 50 m gross. Dies kann gerade beim Einbau von Basisstationen 10 in Strassenbeleuchtungsvorrichtungen 12 wie in diesem Ausführungsbeispiel der Fall sein. Das Handover bei solchen Mikrozellen C₁...C₅, d.h. die Übergabe der Verbindung eines Mobilfunkgeräts eines sich bewegenden Benutzers von der Basisstation 10 einer Zelle C₁ an die Basisstation der nächstfolgenden Zelle Cᵢ₊₁ rsp. Cᵢ₋₁, muss wegen der Grösse der Mikrozellen C₁...C₅ sehr schnell erfolgen können und ist ebenfalls im Stand der Technik in verschiedenen Ausführungsvarianten bekannt und beschrieben. Ein Beispiel eines solchen Verfahren wird in der Patentschrift US5189734 "Cellular radio system" beschrieben.

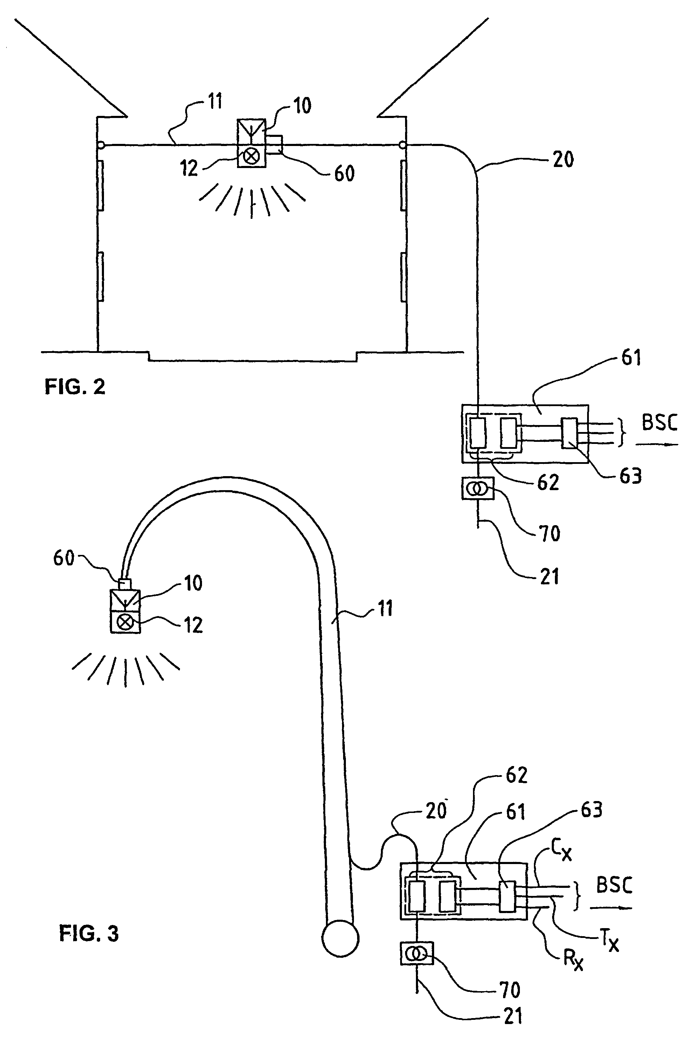

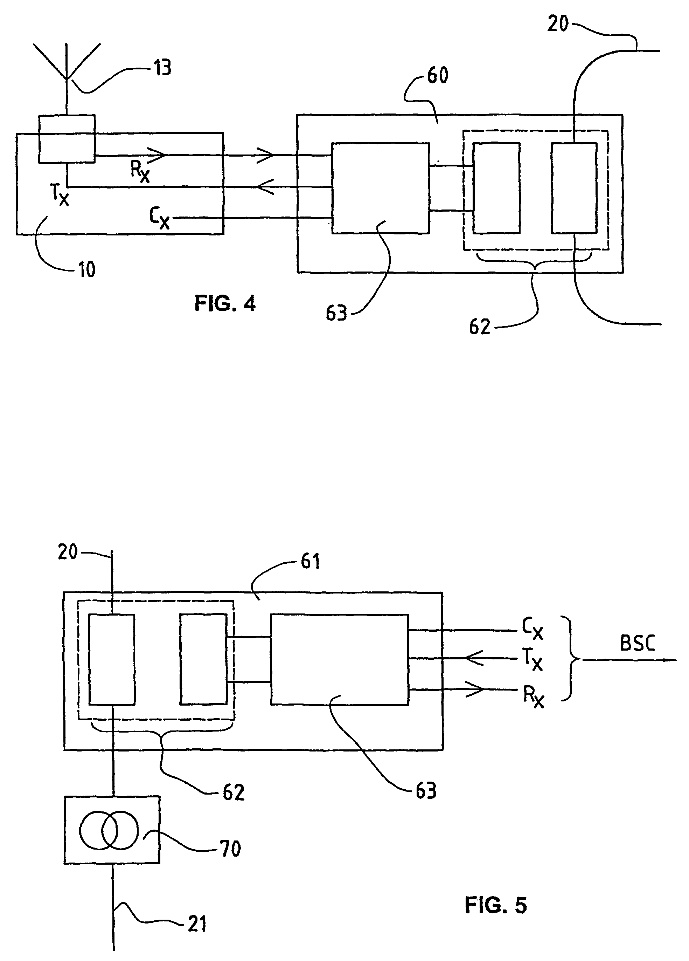

Figure 2 und 3 illustrieren zwei Ausführungsbeispiele eines Mobilfunknetz analog zum Ausführungsbeispiel 1 von in öffentliche Strassenbeleuchtungsvorrichtungen 12 eingebauten Basisstationen 10. Die Figuren 4 und 5 stellen dazu detaillierter die Transceivermodule 60/61 dar. Wie im vorhergehenden Ausführungsbeispiel wird jeweils das Radiofrequenzsignal mittels zweier Transceivermodule 60/61 über das Stromnetz 20 bidirektional zwischen den Basisstationen 10 und Base Station Controller BSC übertragen. Dem Transceivermodul 61 kann ein Transformatormodul 70 vorgeschaltet sein, welches, falls notwendig, die elektrische Spannung der Zuführungsleitung 21 (z.B. 11 kV (kvolt)) auf die von den Strassenbeleuchtungsvorrichtungen 12 benötigte Spannung von z.B. 230 V rsp. 400 V transformiert. Die Transceivermodule 60/61 bestehen jeweils aus einem Koppelelement 62, mittels weichen die Transceivermodule 60/61 an das Stromnetz gekoppelt werden, sowie aus einem Modemmodul 63, welches den Radiofrequenzsignalen entsprechend dem Stromnetz 20 moduliert bzw. demoduliert. Das Modemmodul 63 der Basisstationen 10 umfasst insbesondere die Funktion Radiofrequenzsignale des Frequenzbandes bidirektional zu konvertieren, welches Frequenzband sich zum Senden und Empfangen im freien Raum eignet (d.h. zwischen der Antenne 13 der Basisstation und den sich in der zugeordneten Sende/Empfangszelle befindlichen Mobilfunkgeräten, z.B. 900/1800 MHz) auf das Frequenzband, welches sich für die Übertragung der Signale über das Stromnetz eignet (z.B. zwischen 100MHz und 500MHz). Auf der anderen Seite umfasst das dem Base Station Controller BSC zugeordnete Modemmodul 63 die Funktion, das Übertragungsfrequenzband der Signale auf dem Stromnetz 20 bidirektional in ein für die Übertragung an den Base Station Controller BSC z.B. über Glasfaserkabel oder Koaxialkabel geeignetes Frequenzband, zu konvertieren. Die Transceivermodule 60/61 können z.B. Frequency Shift Keying, Frequency Hoping, FDMA (Frequency Division Multiple Access), TDMA (Time Division Multiple Access: GSM verwendet eine Kombination aus TDMA und FDMA) oder CDMA (Code Division Multiple Access, im speziellen für UMTS, welches mit Breitband-CDMA eine Übertragungsrate von bis zu 2Mbit/Sekunde erreicht) als Frequenzmodulationstechnik für die Übertragung verwenden. Aber auch andere Modulationstechniken sind natürlich vorstellbar, wie ASK (Amplitude Shift Keying) oder PSK (Phase Shift Keying). Das Übertragungsfrequenzband kann z.B. zwischen 50 MHz und 500 MHz, aber z.B. auch unter 400 kHz liegen. Tieffrequenzsignale lassen sich i.N. besser über das Stromnetz übertragen. Es hat sich aber gezeigt, dass Radiofrequenzsignale in einem Frequenzband zwischen 100 MHz und 500 MHz in den meisten Fällen ein vernünftiges Verhältnis zwischen Übertragungsdistanz und Rauschen ergeben. Das Frequenzband zwischen 400 kHz und 50 MHz eignet sich für die Übertragung in den meisten Fällen weniger, da es grosse Spektralrauschkomponenten besitzt, während sich bei Übertragungsfrequenzen über 500 MHz das Radiofrequenzsignal meist zu rasch abschwächt, als dass das Stromnetz als Übertragungsmedium noch sinnvoll ist. Zur Übertragung können die Transceivermodule 60/61 z.B. drei separate Signale verwenden, beispielsweise ein Sendesignal Tₓ, ein Empfangssignal Rₓ sowie ein Kontrollsignal Cₓ. Das Kontrollsignal Cₓ umfasst z.B. Set-up- und Alarminformationen für resp. von der Basisstation 10. Die Transceivermodule 60/61 umfassen beispielsweise einen Kontrollprozessor mit Modem. Der Kontrollprozessor ist an ein Frequenztriplexer/Triptexfilter gekoppelt, wodurch die zwei Übertragungssignale Tₓ und Rₓ und das Kontrollsignal Cₓ in einem separaten Frequenzbereich übertragbar sind. Wie erwähnt kann bei UMTS ein Kanal bis 2 Mbps betragen, was mit den beiden Signalen Rₓ und Tₓ bis 4Mbps bedeutet. So ist das Frequenzband unter 400kHz meist ungeeignet, die beiden Kanäle Rₓ und Tₓ zu übertragen. Aber kann das Frequenzband unter 400kHz zum Beispiel zum Übertragen des Kontrollsignal Cₓ verwendet werden.

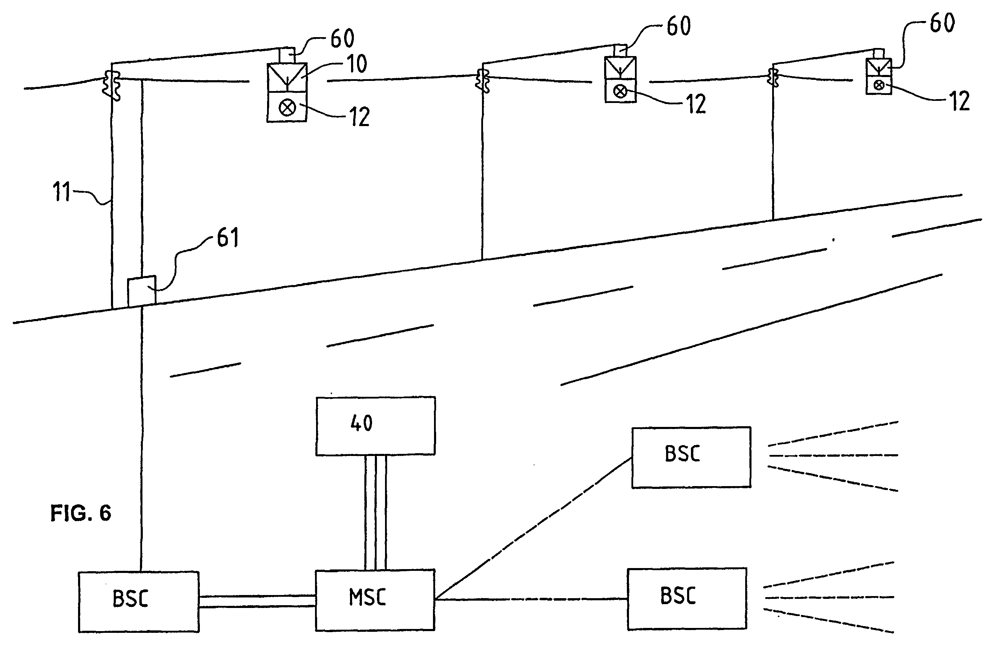

Figur 6 stellt eine Ausführungsbeispiel eines Mobilfunknetz analog zum Ausführungsbeispiel von Figure 1 dar, bei welcher Mobilfunknetz jedoch mehrere der bestehenden Einrichtungen 11 an derselben elektrischen Leitung mit derselben Spannung hängen, ohne dass diese Einrichtungen 11 durch Transformatormodule 70 voneinander abgetrennt sind. In einer solchen Ausführungsbeispiel kann ein einem Base Station Controller (BSC) zugeordnetes Transceivermodul 61 auch mit mehreren Transceivermodulen 60 von verschiedenen Basisstationen 10 kommuniziert, wie es in Figur 6 illustriert ist.

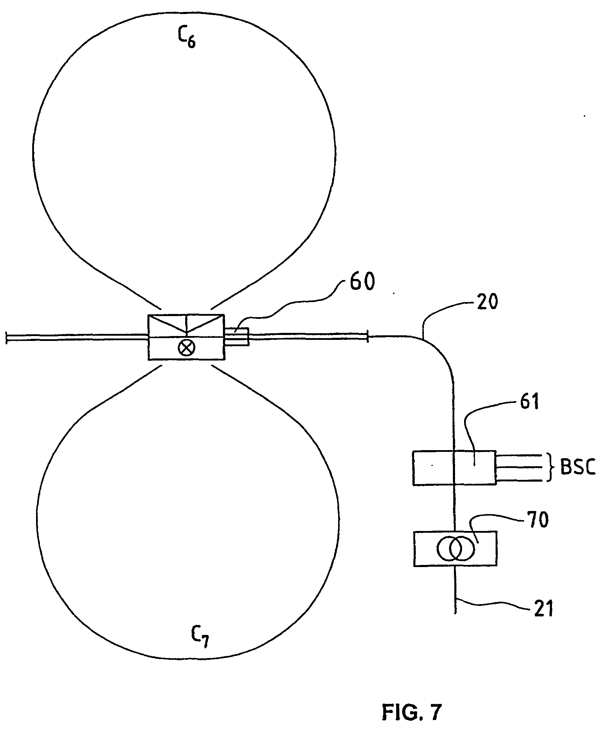

Figur 7 ist eine Ausführungsbeispiel mit einem Mobilfunknetz analog zum Ausführungsbeispiel von Figure 1. In diesem Ausführungsbeispiel werden aber von mindestens einer der in bestehende Einrichtungen 11 eingebauten Basisstationen 10 zwei oder mehrere unterschiedliche Empfangs-/Sendezellen C_{6...7} mit unterschiedlicher Cell Group Identity abgedeckt. Dies kann z.B. unter Ausnutzung der Richtcharakteristik der Antennen erreicht werden. Das Ausführungsbeispiel von Figur 7 entspricht dem Einbau von zwei oder mehreren Basisstationen 10 gemäss der Anzahl Empfangs-/Sendezellen C_{6...7}. Jede Empfangs-/Sendezellen C_{6...7} besitz ihre(n) eigene(n) Kanäl(e), so dass, falls ein Mobilfunkgerät von der einen Empfangs-/Sendezelle zur anderen Empfangs/Sendezelle bewegt wird, ein Handover stattfindet.

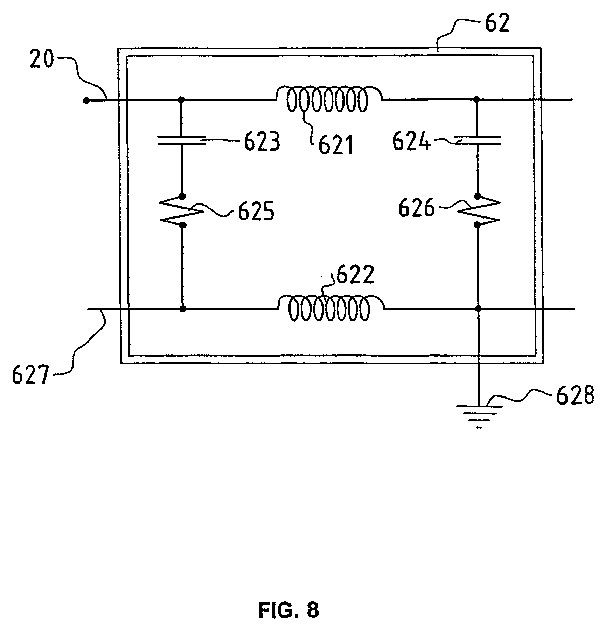

Fig. 8 illustriert eine Architektur, wie sie zur Realisierung des Koppelelements 62 in einem Transceivermodul analog zu den Ausführungsbeispielen der Figuren 4 und 5 verwendet werden kann. Das Koppelelement 62 ist über die Verbindung 20, d.h. einen elektrischen Leiter, an das Stromnetz angekoppelt. Die Stromversorgung der bestehenden Einrichtungen kann wie in diesem Ausführungsbeispiel z.B. mit 230 V und 50 Hz bei max. 100A geschehen. Das Koppelelement 62 umfasst eine primäre Induktivität 621 von z.B. 50 µH bis 200 µH in Abhängigkeit von der benötigten Signalcharakteristik. Die Induktivität 621 des Stromnetzes 20 ist über zwei Koppelkondensatoren 623/624 an die Signalinput/-outputverbindung 627 angekoppelt. Die Verbindung 627 verbindet das Koppelelement 62 mit dem Modemmodul, welches vom Base Station Controller an die Basisstation oder umgekehrt zu übermittelnde Signale in den für die Übertragung geeigneten Frequenzbereich moduliert. Die beiden Koppelkondensatoren 623/624 können z.B. eine Kapazität von 0.01 µF bis 0.5 µF aufweisen. Der zweite Koppelkondensator 624 erzeugt zusammen mit dem ersten Koppelkondensator 623 eine weitere Dämpfung, indem er mit Erde 628 verbunden wird. Die Signalinput/-outputverbindung 627 umfasst eine sekundäre Induktivität 622, z.B. von minimal 250 µH. Die beiden Koppelkondensatoren 623/624 können zusätzlich durch zwei Sicherungen 625/626, z.B. Schmelzsicherungen, ergänzt werden. Falls in diesem Fall die beiden Koppelkondensatoren 623/624 aus irgendwelchen Gründen versagen, ist die Induktivität 622 für den elektrischen Hauptstrom mit Erde verbunden und die Sicherung 626 wird zerstört. Dies kann somit als zusätzliche Sicherheit dienen. Es ist zu erwähnen, dass bei dem Koppelelement 62 sowohl induktive Kopplung (z.B. durch einen Kopplungstransformator für Hochfrequenzen), als auch kapazitive Kopplung oder eine Kombination von beiden verwendet werden kann. Koppelelement der hier beschriebenen Funktionalität können in verschiedenen Ausführungvarianten im Stand der Technik gefunden werden.

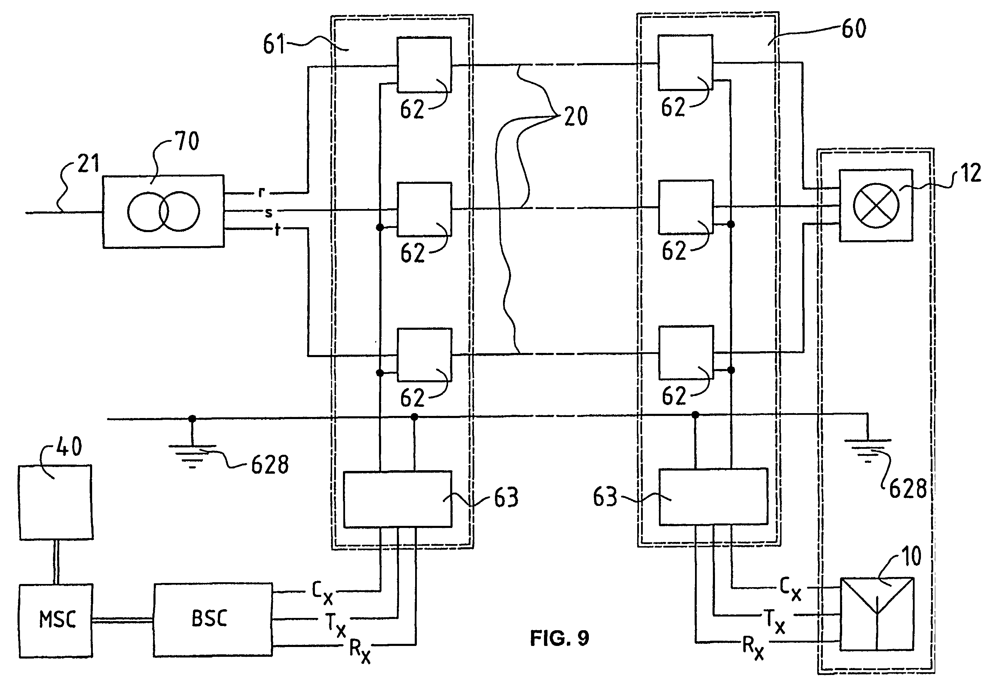

Fig. 9 illustriert eine Architektur, die zur Realisierung von Transceivermodulen 60/61 eines Mobilfunknetzes analog zum Ausführungsbeispiel von Figure 1 mit einer in eine der genannten bestehenden Einrichtungen eingebauten Basisstation 10 verwendet werden kann. In diesem Ausführungsbeispiel ist ein Transformatormodul 70 über den elektrischen Leiter 21 mit einem mehrphasigen Hauptnetz mit z.B. 11 kV verbunden. Das Transformatormodul 70 transformiert den elektrischen Spannung auf die von der genannten bestehenden Einrichtung (in diesem Ausführungsbeispiel eine Strassenbeleuchtungsvorrichtungen 12) benötigten Spannung. In diesem Ausführungsbeispiel wird die Spannung auf die 400 V eines 3 Phasen Stromnetzes r/s/t transformiert. Jede der Phasen r/s/t kann z.B. nur eine einzelne solche Einrichtung versorgen, oder die Einrichtungen können von allen 3 Phasen r/s/t versorgt werden, falls dies benötigt wird, wie z.B. bei verschiedenen Flutlichtstrahlem etc. 628 ist auch in diesem Ausführungsbeispiel die Erde. Das Mobile-service Switching Centre MSC ist ebenfalls wie in den vorhergehenden Ausführungsbeispielen mit dem öffentlichen, geschalteten Telefonnetz (PSTN) 40 verbunden und das Mobile-service Switching Centre MSC seinerseits mit dem Base Station Controller BSC. Die Radiofrequenzsignale werden mittels zweier Transceivermodulen 60/61 über das Stromnetz 20 bidirektional zwischen Basisstation 10 und Base Station Controller BSC übertragen. Dies geschieht, indem das Modemmodul 63 die zu übertragenden Signale analog zum vorhergehenden Ausführungsbeispiel moduliert und auf die Koppelelemente 62 überträgt. Die Input-/Outputsignaie Cₓ, Rₓ und Tₓ können nur auf eine Phase, mehrere Phasen oder alle möglichen vorhandenen Phasen übertragen werden. Da die Phasen r/s/t im Stromnetz kapazitiv koppeln, können die Input/Outputsignale Cₓ/Rₓ/Tₓ, wenn auch die Signale nur auf eine Phase übertragen werden, beim gegenüberliegenden Transceivermodul von irgendeinem der Koppelelemente 62 übernommen werden oder ebenfalls separat abgenommen werden. Die Koppelelemente 62 können u.a. einen Tiefpassfilter umfassen, um die Signale zu separieren. Die Strassenbeleuchtungsvorrichtung 12 ist ebenfalls an das Stromnetz 20 angeschlossen.

Es ist zu ergänzen, dass die Modemmodule 63 im Ausführungsbeispiels der Figure 9 ein 3-Weg-Splittelement umfassen können. Die drei Phasen des Stromnetzes 20 sind jeweils über eine separate Stromschiene in dem Transformatormodul 70 an das Stromnetz 21 gekoppelt. Die drei Koppelelemente 62 der Transceivermodule 60/61 können auch komplexere Hochpassfilterelemente umfassen. Die Koppelelemente 62 werden u.a. auch als. Radiofrequenz "Jumper" bezeichnet, welche üblicherweise einen AC-Blocker und ein Radiofrequenzkoppelelement (kapazitiv und/oder induktiv) umfassen. Die Filterelemente 62 dienen dazu, nur Signale im Radiofrequenzband, welche zur Übermittlung der Telekommunikationssignale verwendet werden, durchzulassen und dabei zu verhindern, dass der elektrische Hauptstrom des Stromnetzes 20 zum Base Station Controller BSC resp. zur Basisstation 10, gelangt. Zwischen den Transceivermodulen 60/61 werden die Telekommunikationssignale in beiden Richtungen übertragen; in Richtung der Basisstation 10, als auch in Richtung des Base Station Controllers BSC. Sind die Radiofrequenzsignale von dem Base Station Controller BSC auf die Basisstation 10 übertragen, werden sie via Antenne in die der Basisstation 10 zugeordnete Empfangs/Sendezelle abgestrahlt. In umgekehrter Richtung werden Radiofrequenzsignale von Mobilfunkgeräten in der einer Basisstation 10 zugeordneten Empfangs-/Sendezelle via Antenne 13 empfangen und über die Transceivermodule 60/61 und das Stromnetz 20 zum Base Station Controller BSC übertragen. Im Stand der Technik können verschiedenste Ausführungsbeispiele von Power Line Communication (PLC) gefunden werden. Weiter ist darauf hinzuweisen, dass sich die vorliegende Erfindung nicht auf Radiofrequenzsignale von Mobilfunknetzen (PLMN: Public Land Mobile Network) beschränken muss. Mit der vorliegenden Erfindung können auch Radiofrequenzsignale von Personal Communication Systemen, Broadcast Video, Broadcast Audio, Paging, Zweiweg- oder direktes Satellitenbroadcasting, drahtlose Netzwerke insbesondere MAN (wireless Metropolitan Area Network) und/oder Radiofrequenztelemetrie sowie WLL (Wireless Local Loop) übertragen werden.

## Patentansprüche

1. Verfahren zum Errichten einer Basisstation (10) eines Mobilfunknetzes und Verbinden der Basisstation (10) mit dem Mobilfunknetz, welches Mobilfunknetz mindestens ein Mobile-service Switching Centre mit einem dem Mobile-service Switching Centre zugeordneten Sende/Empfangsgebiet und ein oder mehrere Base Station Controller mit jeweils ein oder mehreren Basisstationen (10) umfasst, wobei das Mobilfunknetz über das Mobile-service Switching Centre mit dem öffentlichen, geschalteten Telefonnetz (40) verbunden ist, wobei die Base Station Controller mit dem Mobile-service Switching Centre verbunden sind und Kontroll- und Steuerfunktionen für die Basisstationen umfassen, wobei jeweils eine oder mehrere der Basisstationen (10) mit einem gemeinsam zugeordneten Base Station Controller verbunden sind und wobei die Basisstationen (10) jeweils Mittel zum Austausch von Radiofrequenzsignalen mit Mobilfunkgeräten umfassen, **dadurch gekennzeichnet,**
**dass** mindestens eine der Basisstationen (10) in eine bestehende Einrichtung (11) auf öffentlichem, nicht überdecktem Grund eingebaut wird, welche Einrichtung (11) über ein Stromnetz (20/21) gespiesen wird,
**dass** die mindestens eine der Basisstationen (10) mit einem ersten Transceivermodul (60) an das Stromnetz (20/21) gekoppelt wird,
**dass** ein zweites Transceivermodul (61) an anderer Stelle ebenfalls an das Stromnetz (20/21) gekoppelt wird, wodurch das Übertragen von den Radiofrequenzsignalen entsprechenden, elektrischen Signalen bidirektional zwischen den Transceivermodulen (60/61) mittels der Transceivermodule (60/61) über das Stromnetz (20/21) ermöglicht wird,
und **dass** das zweite Transceivermodul (61) mit dem der mindestens einen letztgenannten Basisstation (10) zugeordneten Base Station Controller verbunden wird, so dass Kommunikation zwischen der mindestens einen Basisstation (10) und dem ihr zugeordneten Base Station Controller über das Stromnetz (20/21) miteinander ermöglicht wird.

2. Verfahren nach Anspruch 1, **dadurch gekennzeichnet, dass** die Transceivermodule (60/61) zur Übertragung ein Sendesignal, ein Empfangssignal sowie ein separates Kontrollsignal benutzen.

3. Verfahren nach Anspruch 1 oder 2, **dadurch gekennzeichnet, dass** als öffentliche Einrichtungen (11) zum Einbau der mindestens einen Basisstation (10) Strassenbeleuchtungsvorrichtungen (12) des Strassennetzes (50) verwendet werden.

4. Verfahren nach Anspruch 1 oder 2, **dadurch gekennzeichnet, dass** als öffentliche Einrichtungen (11) zum Einbau der mindestens einen Basisstation (10) Stromversorgungsnetze öffentlicher Verkehrsmittel verwendet werden.

5. Verfahren nach einem der Ansprüche 1 bis 4, **dadurch gekennzeichnet, dass** der Base Station Controller und die mit ihm verbundenen Basisstationen (10) jeweils einen Kontrollprozessor mit Modem (63) umfassen, mittels welchen die Radiofrequenzsignale durch zwei Übertragungssignale und ein Kontrollsignal in einem separaten Frequenzbereich übertragbar sind.

6. Verfahren nach einem der Ansprüche 1 bis 5, **dadurch gekennzeichnet, dass** bei den Transceivermodulen (60/61) Frequency Shift Keying als Frequenzmodulationstechnik für die Übertragung verwendet wird.

7. Verfahren nach einem der Ansprüche 1 bis 5, **dadurch gekennzeichnet, dass** bei den Transceivermodulen (60/61) Frequency Division Multiple Access und/oder Time Division Multiple Access oder Code Division Multiple Access als Frequenzmodulationstechnik für die Übertragung verwendet wird.

8. Verfahren nach einem der Ansprüche 1 bis 7, **dadurch gekennzeichnet, dass** bei den Transceivermodulen (60/61) ein Übertragungsfrequenzband zwischen 100 MHz und 500 MHz zur Übertragung der Radiofrequenzsignale über das Stromnetz (20/21) verwendet wird.

9. Verfahren nach einem der Ansprüche 1 bis 8, **dadurch gekennzeichnet, dass** mindestens eine der Basisstationen (10) zwei unterschiedliche Empfangs-/Sendezellen mit unterschiedlicher Cell Group Identity abdeckt.

10. Mobilfunknetz, welches mindestens ein Mobile-service Switching Centre mit einem dem Mobile-service Switching Centre zugeordneten Sende/Empfangsgebiet, und ein oder mehrere Base Station Controller mit jeweils einer oder mehreren Basisstationen (10) umfasst, wobei das Mobilfunknetz über das Mobile-service Switching Centre mit dem öffentlichen, geschalteten Telefonnetz (40) verbunden ist, wobei die Base Station Controller mit dem Mobile-service Switching Centre verbunden sind und Kontroll- und Steuerfunktionen für die Basisstationen (10) umfassen, wobei jeweils eine oder mehrere der Basisstationen (10) mit einem gemeinsam zugeordneten Base Station Controller verbunden sind, und wobei die Basisstationen (10) jeweils Mittel zum Austausch von Radiofrequenzsignalen mit Mobilfunkgeräten umfassen, **dadurch gekennzeichnet,**
**dass** mindestens eine der Basisstationen (10) in eine vorbestehende Einrichtung (11) auf öffentlichem, nicht überdecktem Grund eingebaut ist, welche Einrichtung (11) über ein Stromnetz (20/21) gespeist wird,
**dass** die mindestens eine letztgenannte Basisstation (10) ein erstes Transceivermodul (60) umfasst, das an das Stromnetz (20/21) gekoppelt ist,
und **dass** der zugeordnete Base Station Controller mittels eines zweiten Transceivermoduls (61) ebenfalls an das Stromnetz (20/21) gekoppelt ist, so dass den Radiofrequenzsignaten entsprechende elektrische Signale bidirektional zwischen den Transceivermodulen (60/61) über das Stromnetz (20/21) übertragbar sind.

11. Mobilfunknetz nach Anspruch 10, **dadurch gekennzeichnet, dass** die Transceivermodule (60/61) zur Übertragung ein Sendesignal, ein Empfangssignal sowie ein separates Kontrollsignal benutzen.

12. Mobilfunknetz nach Anspruch 10 oder 11, **dadurch gekennzeichnet, dass** die genannten Einrichtungen (11) Strassenbefeuchtungsvorrichtungen (12) des Strassennetzes (50) sind.

13. Mobilfunknetz nach Anspruch 10 oder 12, **dadurch gekennzeichnet, dass** die genannten Einrichtungen (11) Stromversorgungsnetze öffentlicher Verkehrsmittel sind.

14. Mobilfunknetz nach einem der Ansprüche 10 bis 13, **dadurch gekennzeichnet, dass** die Transceivermodule (60/61) jeweils einen Kontrollprozessor mit Modem (63) umfassen, welcher Kontrollprozessor an ein Frequenztriplexer/Triplexfilter gekoppelt ist, mittels welchen die Radiofrequenzsignale durch zwei Übertragungssignale und ein Kontrollsignal in einem separaten Frequenzbereich übertragbar sind.

15. Mobilfunknetz nach einem der Ansprüche 10 bis 14, **dadurch gekennzeichnet, dass** die Transceivermodule (60/61) Frequency Shift Keying als Frequenzmodulationstechnik für die Übertragung benutzen.

16. Mobilfunknetz nach einem der Ansprüche 10 bis 14, **dadurch gekennzeichnet, dass** die Transceivermodule (60/61) Frequency Division Multiple Access und/oder Time Division Multiple Access oder Code Division Multiple Access als Frequenzmodulationstechnik für die Übertragung benutzen.

17. Mobilfunknetz nach einem der Ansprüche 10 bis 16, **dadurch gekennzeichnet, dass** die Transceivermodule (60/61) ein Übertragungsfrequenzband zwischen 100 MHz und 500 MHz zur Übertragung der Radiofrequenzsignale über das Stromnetz (20/21) benutzen.

18. Mobilfunknetz nach einem der Ansprüche 10 bis 17, **dadurch gekennzeichnet, dass** mit mindestens einer der Basisstationen (10) zwei oder mehr unterschiedliche Empfangs-/Sendezellen mit unterschiedlicher Cell Group Identity abdeckbar sind.

## Claims

1. Method for setting up a base station (10) of a mobile radio network and for connecting the base station (10) to the mobile radio network, which mobile radio network comprises at least one mobile-service switching centre, with a transmission/reception area assigned to the mobile-service switching centre, and one or more base station controllers each with one or more base stations (10), the mobile radio network being connected via the mobile-service switching centre to the public switched telephone network (40), the base station controllers being connected to the mobile-service switching centre and comprising monitoring and control functions for the base stations, one or more of the base stations (10) in each case being connected to a common assigned base station controller, and the base stations (10) each comprising means for exchange of radio frequency signals with mobile radio devices, **characterised**
**in that** at least one of the base stations (10) is installed in an existing facility (11) on exposed public ground, which facility (11) is supplied by a power supply system (20/21),
**in that** the at least one of the base stations (10) is coupled to the power supply system (20/21) with a first transceiver module (60),
**in that** a second transceiver module (61) is likewise coupled to the power supply system (20/21) at another location, whereby the transmission of electrical signals corresponding to the radio frequency signals is made possible bidirectionally over the power supply system (20/21) between the transceiver modules (60/61) by means of the transceiver modules (60/61),
and **in that** the second transceiver module (61) is connected to the base station controller assigned to the at least one last-mentioned base station (10), so that communication to one another over the power supply system (20/21) between the at least one base station (10) and the base station controller assigned to it is made possible.

2. Method according to claim 1, **characterised in that** the transceiver modules (60/61) use for transmission a transmitting signal, a receiving signal, and a separate control signal.

3. Method according to claim 1 or 2, **characterised in that** used as public facilities (11) for installation of the at least one base station (10) are street illumination installations (12) of the road network (50).

4. Method according to claim 1 or 2, **characterised in that** used as public facilities (11 ) for installation of the at least one base station (10) are power supply systems of means of public transport.

5. Method according to one of the claims 1 to 4, **characterised in that** the base station controller and the base stations (10) connected to it each comprise a control processor with modem (63) by means of which the radio frequency signals are transmittable through two transmission signals and a control signal in a separate frequency range.

6. Method according to one of the claims 1 to 5, **characterised in that** used as the frequency modulation technique for the transmission in the case of the transceiver modules (60/61) is frequency shift keying.

7. Method according to one of the claims 1 to 5, **characterised in that** used as the frequency modulation technique for the transmission in the case of the transceiver modules (60/61) is frequency division multiple access and/or time division multiple access or code division multiple access.

8. Method according to one of the claims 1 to 7, **characterised in that** used in the case of the transceiver modules (60/61) is a transmission frequency range of between 100 MHz and 500 MHz for the transmission of the radio frequency signals over the power supply system (20/21).

9. Method according to one of the claims 1 to 8, **characterised in that** at least one of the base stations (10) covers two different reception/transmission cells with differing cell group identity.

10. Mobile radio network which comprises at least one mobile-service switching centre, with a transmission/reception area assigned to the mobile-service switching centre, and one or more base station controllers each with one or more base stations (10), the mobile radio network being connected via the mobile switching centre to the public switched telephone network (40), the base station controllers being connected to the mobile service switching centre and comprising monitoring and controlling functions for the base stations (10), in each case one or more of the base stations (10) being connected to a common, assigned base station controller, and the base stations (10) each comprising means for exchange of radio frequency signals with mobile radio devices, **characterised**
**in that** at least one of the base stations (10) is installed in a previously existing facility (11) on exposed public ground, which facility is supplied via a power supply system (20/21),
**in that** the at least one last-mentioned base station (10) comprises a first transceiver module (60) which is coupled to the power supply system (20/21),
and **in that** the assigned base station controller comprises a second transceiver module (61) which is likewise coupled to the power supply system (20/21) so that electrical signals corresponding to the radio frequency signals are transmittable bidirectionally over the power supply system (20/21) between the transceiver modules (60/61).

11. Mobile radio network according to claim 10, **characterised in that** the transceiver modules (60/61) use for transmission of a transmitting signal, a receiving signal and a separate control signal.

12. Mobile radio network according to claim 10 or 11, **characterised in that** the said facilities (11) are street illumination installations (12) of the road network (50).

13. Mobile radio network according to claim 10 or 12 <sic. 11 >, **characterised in that** the said facilities (11) are power supply systems of means of public transport.

14. Mobile radio network according to one of the claims 10 to 13, **characterised in that** the transceiver modules (60/61) each comprise a control processor with modem (63), which control processor is coupled to a frequency triplexer / triplex filter by means of which the radio frequency signals are transmittable through two transmission signals and a control signal in a separate frequency range.

15. Mobile radio network according to one of the claims 10 to 14, **characterised in that** the transceiver modules (60/61) use frequency shift keying as the frequency modulation technique for the transmission.

16. Mobile radio network according to one of the claims 10 to 14, **characterised in that** the transceiver modules (60/61) use frequency division multiple access and/or time division multiple access or code division multiple access as the frequency modulation technique for the transmission.

17. Mobile radio network according to one of the claims 10 to 16, **characterised in that** the transceiver modules (60/61) use a transmission frequency range of between 100 MHz and 500 MHz for transmission of the radio frequency signals over the power supply system (20/21).

18. Mobile radio network according to one of the claims 10 to 17, **characterised in that** two or more different reception/transmission cells with differing cell group identity are able to be covered with at least one of the base stations (10).

## Revendications

1. Procédé pour l'établissement d'une station de base (10) d'un réseau de téléphonie mobile et pour relier la station de base (10) au réseau de téléphonie mobile, réseau de téléphonie mobile comprenant au moins un centre de commutation de service mobile (Mobile-Service Switching Centre), une zone de réception/émission associée au centre de commutation de service mobile et un ou plusieurs contrôleurs de station de base (Base Station Controller) avec respectivement une ou plusieurs stations de base (10), le réseau de téléphonie mobile étant relié par le réseau téléphonique publique commuté (40) au centre de commutation de service mobile, les contrôleurs de station de base étant reliés au centre de commutation de service mobile et comprenant des fonctions de contrôle et de commande pour les stations de base, respectivement une ou plusieurs des stations de base (10) étant reliées à un contrôleur de station de base associé commun et les stations de base (10) comprenant respectivement des moyens pour l'échange de signaux à radiofréquence avec des appareils de radiotéléphonie mobile, **caractérisé**
**en ce qu'**au moins l'une des stations de base (10) est montée dans un dispositif existant sur un terrain public découvert, le dispositif (11) étant alimenté par un réseau électrique (20/21)
**en ce qu'**au moins l'une des stations de base (10) est accouplée au réseau électrique (20/21) par un module émetteur-récepteur (60),
**en ce qu'**un second module émetteur-récepteur (61) est accouplé à un autre endroit au réseau électrique (20/21) permettant ainsi la transmission bidirectionnelle de signaux électriques correspondant aux signaux de radiofréquence entre les modules émetteurs-récepteurs (60/61) au moyen des modules émetteurs-récepteurs (60/61) par le réseau électrique (20/21),
et **en ce que** le second module émetteur-récepteur (61) est relié au contrôleur de station de base associé au moins à la dernière station de base citée (10) de sorte que la communication entre au moins l'une des stations de base (10) et le contrôleur de station de base associé par l'intermédiaire du réseau électrique (20/21) soit possible.

2. Procédé selon la revendication 1, **caractérisé en ce que** les modules émetteurs-récepteurs (60/61) utilisent pour la transmission un signal émetteur, un signal récepteur et un signal séparé de contrôle.

3. Procédé selon la revendication 1 ou 2, **caractérisé en ce qu'**en tant qu'installations publiques (11) pour le montage d'au moins une station de base (10), on utilise des dispositifs d'éclairage publique (12) du réseau routier (50).

4. Procédé selon la revendication 1 ou 2, **caractérisé en ce qu'**en tant qu'installations publiques (11) pour le montage d'au moins une station de base (10), on utilise des réseaux d'alimentation de courant des moyens de transport publiques.

5. Procédé selon l'une des revendications 1 à 4, **caractérisé en ce que** le contrôleur de station de base et les stations de base (10) qui y sont reliées comprennent respectivement un processeur de commande avec un modem (63) au moyen desquels les signaux de radiofréquence peuvent être transmis par deux signaux de transmission et un signal de contrôle dans une plage séparée de fréquence.

6. Procédé selon l'une des revendications 1 à 5, **caractérisé en ce qu'**avec les modules émetteurs-récepteurs (60/61), on utilise la modulation par déplacement de fréquence en tant que technique de modulation de fréquence pour la transmission.

7. Procédé selon l'une des revendications 1 à 5, **caractérisé en ce qu'**avec les modules émetteurs-récepteurs (60/61), on utilise l'accès multiple par répartition en fréquence et/ou l'accès multiple par répartition dans le temps et/ou l'accès multiple par répartition en code en tant que technique de modulation de fréquence pour la transmission.

8. Procédé selon l'une des revendications 1 à 7, **caractérisé en ce qu'**avec les modules émetteurs-récepteurs (60, 61), on utilise une bande de fréquence de transmission entre 100 MHz et 500 MHz pour la transmission des signaux de radiofréquence par le réseau électrique (20/21).

9. Procédé selon l'une des revendications 1 à 8, **caractérisé en ce qu'**au moins l'une des stations de base (10) couvre deux cellules d'émission/réception avec une identité de groupe de cellules différentes.

10. Réseau de radiotéléphonie mobile qui comprend au moins un centre de commutation de service mobile, une zone de réception/émission associée au centre de commutation de service mobile (Mobile-Service Switching Centre) et un ou plusieurs contrôleurs de station de base (Base Station Controller) avec respectivement une ou plusieurs stations de base (10), le réseau de téléphonie mobile étant relié par le réseau téléphonique publique commuté (40) au centre de commutation de service mobile, les contrôleurs de station de base étant reliés au centre de commutation de service mobile et comprenant des fonctions de contrôle et de commande pour les stations de base (10), respectivement une ou plusieurs des stations de base (10) étant reliées à un contrôleur de station de base associé commun et les stations de base (10) comprenant respectivement des moyens pour l'échange de signaux à radiofréquence avec des appareils de radiotéléphonie mobile, **caractérisé**
**en ce qu'**au moins l'une des stations de base (10) est montée dans un dispositif existant (11) sur un terrain public découvert, le dispositif (11) étant alimenté par un réseau électrique (20/21)
**en ce qu'**au moins l'une des stations de base (10) comprend un premier module émetteur-récepteur (60) qui est accouplé au réseau électrique (20/21),
et **en ce que** le contrôleur de station de base associé est accouplé au moyen d'un second module émetteur-récepteur (61) également au réseau électrique (20/21) de sorte que des signaux électriques correspondants aux signaux de radiofréquence puissent être transmis de manière bidirectionnelle entre les modules émetteurs-récepteurs (60/61) par le réseau électrique (20/21).

11. Réseau de radiotéléphonie mobile selon la revendication 10, **caractérisé en ce que** les modules émetteurs-récepteurs (60/61) utilisent un signal émetteur, un signal récepteur ainsi qu'un signal de commande séparé pour la transmission.

12. Réseau de radiotéléphonie mobile selon la revendication 10 ou 11, **caractérisé en ce que** lesdits dispositifs (11) sont des équipements d'éclairage public (12) du réseau routier (50).

13. Réseau de radiotéléphonie mobile selon la revendication 10 ou 12, **caractérisé en ce que** lesdits dispositifs (11) sont des réseau d'alimentation électrique de moyen de transport publiques.

14. Réseau de radiotéléphonie mobile selon l'une des revendications 10 à 13, **caractérisé en ce que** les modules émetteurs-récepteurs (60/61) comprennent respectivement un processeur de contrôle avec modem (63), processeur de contrôle qui est couplé à un triplexeur de fréquence / filtre triplexeur, au moyen desquels les signaux de radiofréquence sont transmissibles par deux signaux de transmission et un signal de contrôle dans une plage de fréquence séparée.

15. Réseau de radiotéléphonie mobile selon l'une des revendications 10 à 14, **caractérisé en ce que** les modules émetteurs-récepteurs (60/61) utilisent la modulation par déplacement de fréquence comme technique de modulation pour la transmission.

16. Réseau de radiotéléphonie mobile selon l'une des revendications 10 à 14, **caractérisé en ce que** les modules émetteurs-récepteurs (60/61) utilisent l'accès multiple par répartition en fréquence et/ou l'accès multiple par répartition dans le temps et/ou l'accès multiple par répartition en code en tant que technique de modulation de fréquence pour la transmission.

17. Réseau de radiotéléphonie mobile selon l'une des revendications 10 à 16, **caractérisé en ce que** les modules émetteurs-récepteurs (60/61) utilisent une bande de fréquence de transmission entre 100 MHz et 500 MHz pour la transmission des signaux de radiofréquence par le réseau électrique (20/21).

18. Réseau de radiotéléphonie mobile selon l'une des revendications 10 à 14, **caractérisé en ce qu'**avec au moins l'une de des stations de base (10), deux ou plusieurs cellules d'émission et de réception différentes peuvent être couvertes par une identité différente de groupe de cellules.
